(19) Europäisches Patentamt / European Patent Office / Office européen des brevets

(11) **EP 2 925 679 B1**

(12) **EUROPEAN PATENT SPECIFICATION**

(45) Date of publication and mention
of the grant of the patent:
**06.06.2018 Bulletin 2018/23**

(21) Application number: **13795504.3**

(22) Date of filing: **26.11.2013**

(51) Int Cl.:
*C02F 3/00* (2006.01)     *C02F 3/34* (2006.01)
*C02F 3/02* (2006.01)     *C02F 1/461* (2006.01)
*C02F 101/16* (2006.01)   *C02F 103/06* (2006.01)

(86) International application number:
**PCT/EP2013/074711**

(87) International publication number:
**WO 2014/082989 (05.06.2014 Gazette 2014/23)**

(54) **BIOELECTROCHEMICAL WATER TREATMENT AND APPARATUS**

BIOELEKTROCHEMISCHE WASSERBEHANDLUNG UND VORRICHTUNG

TRAITEMENT BIOÉLECTROCHIMIQUE DE L'EAU ET APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2012 EP 12382471**

(43) Date of publication of application:
**07.10.2015 Bulletin 2015/41**

(73) Proprietor: **Universitat de Girona
17071 Girona (ES)**

(72) Inventors:
• **COLPRIM GALCERÁN, Jesús
E-17820 Banyoles (ES)**
• **BALAGUER CONDOM, Maria Dolors
E-17003 Girona (ES)**
• **PUIG BROCH, Sebastià
E-17170 Amer (ES)**
• **POUS I RODRÍGUEZ, Narcís
E-17174 Sant Feliu De Pallarols (ES)**

(74) Representative: **Sugrañes Patentes y Marcas
Calle Provenza 304
08008 Barcelona (ES)**

(56) References cited:
**EP-A1- 2 000 000      WO-A2-2012/012647**

• **JOACHIM DESLOOVER ET AL: "Biocathodic
Nitrous Oxide Removal in Bioelectrochemical
Systems", ENVIRONMENTAL SCIENCE &
TECHNOLOGY, vol. 45, no. 24, 15 December 2011
(2011-12-15), pages 10557-10566, XP055093353,
ISSN: 0013-936X, DOI: 10.1021/es202047x**

Remarks:
The file contains technical information submitted after the application was filed and not included in this specification

**Description**

The present invention relates to methods and devices for the treatment of contaminated water, by reducing oxidised nitrogen compounds to nitrogen gas.

BACKGROUND ART

Water contamination is a worldwide environmental challenge nowadays. Consumption of water containing high nitrate levels as drinking water can cause many diseases (i.e. an increased risk of respiratory tract infections and goiter development in children). The Nitrates Directive (91/767/EU), the Water Framework Directive (Directive 2000/60/EC), and the Groundwater Directive (Directive 2006/118/EC) all consider nitrate pollution to be one of the main threats to water quality, requiring urgent and intensive monitoring and strong policies.

To remove nitrates from water, different technologies can be used. Currently, the Environmental Protection Agency (EPA) considers only ion exchange, reverse osmosis and reverse electrodialysis to be effective methods for the decrease of nitrate concentration below its limit in drinking water. These technologies have some drawbacks, such as high energy requirements and the generation of waste brine (nitrate/nitrite are separeted from water not treated), which requires an additional treatment.

Groundwater contaminated with nitrate/nitrite contains almost no organic matter. As a result, using biological denitrification in activated heterotrophic sludge systems requires the addition of an external carbon source producing considerable amount of sludge which should be treated before disposal. Accordingly, the biological heterotrophic denitrification is only suitable for the removal of relatively low concentration of nitrates due to the requirement of appropriate carbon to nitrogen (C/N) ratio. Therefore, complementary techniques are required for obtaining a free nitrate/nitrite stream in contaminated water.

Biological heterotrophic denitrification is a suitable method to treat wastewater containing nitrate/nitrite, because nitrate is transformed to harmless nitrogen gas, with the present of an electron donor. Denitrifying bacteria, are responsible for biological denitrification and use nitrate/nitrite as electron acceptor during their respiratory process instead of oxygen in anoxic condition and produce harmless gas $N_2$ by reduction of nitrate/ nitrite through three/four steps. However, the efficiency of biological remediation of wastewater with high concentration of nitrate and low chemical oxygen demand (COD) as carbon source is limited. Under these circumptances an external source as electron donor is indispensable.

Autotrophic denitrification is a more sustainable solution because carbon is not necessary, and thus no carbon dioxide is released, leading to better biostability. Autotrophic denitrification can also be achieved by inorganic electron donors such as hydrogen through electrolysis but requiring a high energy input. The cathode of bioelectrochemical systems can perform autotrophic nitrate removal.

Microbial fuel cells (MFC) and microbial electrolysis cell (MEC) are different systems, which work following different procedures. MFC produces electricity and MEC uses electricity to drive reactions.

A MFC converts chemical energy, available in a bio-convertible substrate, directly into electricity. To achieve this, bacteria are used as a catalyst to convert substrate into electrons. The bacteria are attached in the anode and convert a substrate such as glucose, acetate but also wastewater into carbon dioxide ($CO_2$), protons and electrons. Under aerobic conditions, bacteria use oxygen or nitrate as a final electron acceptor to produce water. However, in the anode of a MFC, no oxygen is present and bacteria need to switch from their natural electron acceptor to an insoluble acceptor (electrode), such as the MFC anode. Due to the ability of bacteria to transfer electrons to an insoluble electron acceptor, we can use a MFC to collect the electrons originating from the microbial metabolism. The electron transfer can occur via membrane-associated components. The electrons flow through an electrical circuit with a load or a resistor to the cathode. The potential difference between the anode and the cathode, together with the flow of electrons results in the generation of electrical power. The protons flow through the proton or cation exchange membrane to the cathode. At the cathode, an electron acceptor is chemically reduced. Idealy, oxygen is reduced to water

In an MEC exoelectrogenic microbes on the anode or a metallic catalyst oxidize organic matter to produce $CO_2$, protons and electrons. The electrolysis of water takes place under low organic matter avaliability. Electrons travel from the anode to the cathode where they reduce protons from the reactor solution, producing hydrogen gas. For hydrogen production to occur at the cathode, a small voltage must be added to the system to make hydrogen evolution thermodynamically favorable. Practical applications of MECs will require the use of multiple-electrode systems operated under continuous flow conditions.

Document WO2012012647 discloses a microbial fuel cell, wherein organic materia is oxidised to carbon dioxide in the anode, whereas nitrate is reduced in the cathode. Both, anode and cathode are electrically connected by a electric resistance.. Furthermore, the anodic compartment and the cathodic compartment have independent flows. In this system, the nitrate removal efficiency depends on the electrons produced in the anode compartment. At low C/N ratios, low carbon (organic matter) is avaliable to be oxidised and consequently, a low amount of electrons and protons will be produced. Document EP2000000 discloses a microbial fuel cell, construction for the generation of electrical energy, wherein both the anode electrode and the cathode chamber are submersed into an anaerobic environment to generate electrical energy. Wherein microorganisms in the anaerobic environment oxidize reduced organic or inorganic material thereby producing a plurality of electrons.

None of the above mentioned prior art documents disclose a method wherein the cathodic potential is controlled, in these documents the cathodic potential is set by the operation of the anode.

The publication "Biocathodic Nitrous Oxide Removal in Bioelectrochemical Systems" (Joachim Desloover et al, Environmetal Science & Technology, vol.45, no. 24, 15 December 2011) describes (see Batch E) a microbial electrolysis cell with a cathode and an anode compartments wherein a fixed cathode potential is poised. During the setup of the cell each compartment is individually filled and emptied in a continuous mode, the system then operating as a microbial fuel cell (fixed resistance and electron flow dependent on the oxidation of acetate in the anode compartment).

Nevertheless, bioelectrochemical methods known in the art do not auto-regulate to the variations of the nitrate concentration in the contaminated water. Thus, the energetic consumption in the conventional bioelectrochemical methods is not optimized.

Accordingly, there is a need for improved methods and systems that can efficiently and economically remove oxidised nitrogen compounds from water streams with the minimal emissions of greenhouse gases (nitrous oxide gas: $N_2O$).

## SUMMARY OF THE INVENTION

The present invention provides improved microbial electrolysis cell systems and methods for removing oxidised nitrogen compounds from water streams, preferably groundwater and wastewater.

In particular, according to a first aspect, the present invention provides a method for treating water containing oxidised nitrogen compounds as recited by the appended claim 1. In a second aspect of the present invention, it is provided a microbial electrolysis cell (MEC) system specially designed to the treatment of water containing oxidised nitrogen compounds, as recited by the appended claim 10.

## BRIEF DESCRIPTION OF THE DRAWINGS

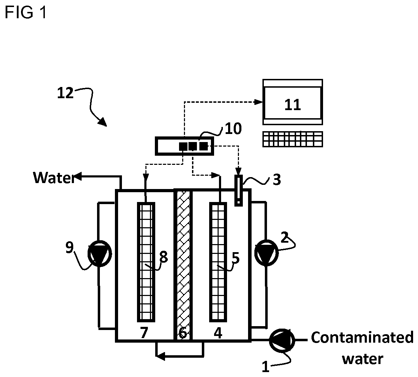

FIG 1 Schematic view of the microbial electrolysis cell (MEC) system of the invention. Legend: Pump to feed the cathode of the MEC 1, pump for homogenising the cathode of the MEC 2, reference electrode 3, cathode compartment 4, working electrode 5, cation exchange membrane 6, anode compartment 7, counter electrode 8, pump for homogenising the anode of the MEC 9, potentiostat 10, control panel 11 and MEC 12.

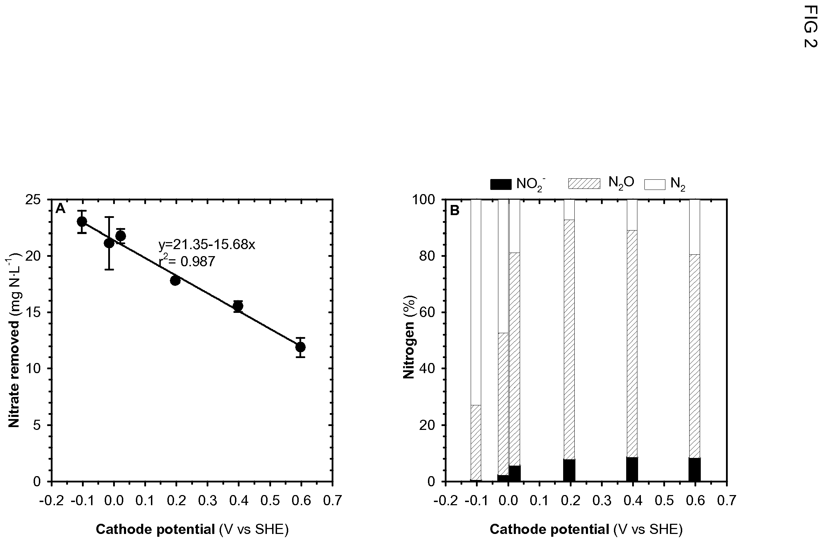

FIG 2. A) Relation between nitrate removed from groundwater at different cathode potentials. Error bars represent standard deviations of replicate samples (n=3). B) Percentages of nitrogen compounds at the effluent respect to the nitrate removed at different cathode potentials.

## DETAILED DESCRIPTION OF THE INVENTION

The microbial electrolysis cell (MEC) system according to the present invention (see FIG1) comprises an anode 7 and a cathode 4 compartements placed on opposite sides of a chamber. The working 5 and reference 3 electrodes are placed in the cathode compartment. The counter electrode 8 is located in the anode compartment. The working electrode 5 comprises attached therein bacterias able to reduce oxidised nitrogen compounds. A cation exchange membrane 6 is located between the anode and cathode compartements, and a potentiostat 10, operatively connected to the working electrode 5, the reference electrode 3 and the counter electrode 8, which poises the cathode potential in a range comprised of from -0.20 and 0.0 V vs Standard Hydrogen Electrode (SHE).

Contaminated water with oxidised nitrogen compounds is continuously fed into the cathode compartment 4 using a pump 1. The effluent of the cathode goes to the anode compartment 7, where the treatment ends. An internal recirculation loop (2 and 9) was placed in each compartment to maintain well-mixed conditions and avoid concentration gradients. The potentiostat 10 regulates the performance of the system using three electrodes (counter, reference and working). Finally, a control panel 11 monitors and controls the treatment performance.

The control panel 11 may be used to swich on and off the system after a predetermined period of time, monitor the anodic potential, cathodic potential, cell potential, current and/or on-line probes measurements (i.e. temperature,pH, conductivity, dissolved oxygen of the system), measurements of the oxidised nitrogen removal.

As mentioned above, the electrochemical system is a three electrode cell, comprising a reference electrode, a counter (or auxiliary) electrode and a working electrode. A reference electrode is an electrode which has a stable and well-known electrode potential.

The standard hydrogen electrode (abbreviated SHE), is a redox electrode wherein its absolute electrode potential is estimated to be $4.44 \pm 0.02$ V at 25 °C, but to form a basis for comparison with all other electrode reactions, hydrogen's standard electrode potential ($E^0$) is declared to be zero at all temperatures. Potentials of any other electrodes are compared with that of the standard hydrogen electrode at the same temperature.

The working electrode is the electrode in an electrochemical system on which the reaction of interest is occurring.

The counter electrode, often also called the auxiliary electrode, is an electrode used in a three electrode electrochemical cell in which an electrical current is expected to flow. The auxiliary electrode is distinct from the reference electrode, which establishes the electrical potential against which other potentials may be measured, and the working electrode, at which the cell reaction takes place.

When a three electrode cell is used to perform electroanalytical chemistry, the auxiliary electrode, along with the working electrode, provides circuit over which current is either applied or measured. Here, the potential of the auxiliary electrode is usually not measured and is adjusted to so as to balance the reaction occurring at the working electrode. This configuration allows the potential of the working electrode to be measured against a known reference electrode without compromising the stability of that reference electrode by passing current over it.

Water contaminated with oxidised nitrogen compounds (i.e. nitrate, nitrite and nitrous oxide) is reduced in the cathode compartment. The denitrification of nitrate to nitrite is the first of four reduction steps (reactions 1-4, standard potentials expressed versus standard hydrogen electrode (SHE)) towards nitrogen gas ($N_2$) using 5 mole electrons per mole of nitrogen. The reduction reactions at the cathode are the following:

$$NO_3^- + 2e^- + 2H^+ \rightarrow NO_2^- + H_2O$$

$$E^{\circ\prime} = +0.433 \text{ V vs SHE} \quad (1)$$

$$NO_2^- + e^- + 2H^+ \rightarrow NO + H_2O$$

$$E^{\circ\prime} = +0.350 \text{ V vs SHE} \quad (2)$$

$$NO + e^- + H^+ \rightarrow \tfrac{1}{2} N_2O + \tfrac{1}{2} H_2O$$

$$E^{\circ\prime} = +1.175 \text{ V vs SHE} \quad (3)$$

$$\tfrac{1}{2} N_2O + e^- + H^+ \rightarrow \tfrac{1}{2} N_2 + \tfrac{1}{2} H_2O$$

$$E^{\circ\prime} = +1.355 \text{ V vs SHE} \quad (4)$$

The reduction steps are catalised by autotrophic bacteria capable to reduce oxidised nitrogen compounds attached at the working electrode 5. The operational conditions applied influence the treatment capacity. The potentiostat regulates the electron flow to the cathode and consequently, the removal rate. The key point is identifying the amount of electrons required to completely reduce nitrate/nitrite/nitrous oxide ($N_2O$) to dinitrogen gas ($N_2$).

In accordance with the method of the present invention, as the cathode potential is fixed at lower values, the difference between the cathode electrode potential and the cathode redox pair potential (sequential reductions from $NO_3^-$ to $N_2$) is enlarged. The major the difference between the cathode electrode potential and the redox pair potential, the major the electron flux between them to reach the potential equilibrium. Since this electron flux is from where the bacteria obtain its energy, the higher the electron flux is, the more energy is available for bacteria. Thus, more nitrates can be reduced. Nevertheless, higher negative cathode potential does not result in a more nitrate reduction to the desired $N_2$. The bacteria population is unstable at higher or lower potentials than proposed in this study.

Modifying the cathode potential not only results in a change in the nitrate removal rate performance, it also modify the composition of the nitrate reduction products ($NO_2^-$, $N_2O$, $N_2$). By poising the cathode potential within the claimed range, the nitrate reduction was moved from producing intermediate products as $NO_2^-$ and $N_2O$, to produce the

desired final product, $N_2$.

According to an embodiment of the present invention, the potentiostat poises the cathode potential in a range comprised of from -0.18 to -0.02 V vs standard hydrogen electrode (SHE); more preferably the potentiostat poises the cathode potential in a range comprised of from -0.16 to -0.06 V vs SHE; being particularly preferred wherein the potentiostat poises the cathode potential at -0.10 V vs SHE. In accordance with a particular embodiment of the present invention, the potentiostat poises the cathode potential in a range comprised of from -0.220 to 0.0 V vs SHE; preferably from -0.215 to -0.06 V vs SHE; more preferably from -0.210 to -0.100 V vs SHE.

It has been observed, that with the method of the present invention, between -103 and -203 mV vs SHE, drinking-water quality was accomplished in terms of nitrates and nitrites according to World Health Organization. At -123 mV vs SHE the highest nitrate reduction to $N_2$ occurred (93.9%), with an operational cost similar than conventional technologies (0.68•$10^{-2}$ kWh/gN-$NO_3^-$ removed). Therefore, cathode potential influenced nitrate reduction but anode electron donor did not. Therefore, it is particularly preferred when the potentiostat poises the cathode potential in the range comprised of from -0.103 and -0.203 V vs SHE, being most preferred when the potentiostat poises the cathode potential at -0.123 V vs SHE.

Accordingly, nitrate-polluted water can be successfully treated in the MEC of the invention at a competitive cost.

By poisoning the cathode potential, the potentiostat doses the electrons required by applying current to the system. Thus, the system 12 is capable to adapt to water dynamics. If the concentration of oxidesed nitrogen compounds in water increase, the potentiostat would apply high current to meet the optimal cathode potential, and viceversa.

Therefore, according to an embodiment of the method of the present invention, when a variation in the concentration of oxidised nitrogen compounds or the conductivity and pH in the water occurs, then the potentiostat variates the current applied to meet the poised cathode potential.

The anode is fed with the effluent of the cathode compartment. In this compartment an oxidation reaction of water to oxygen gas occurs. Therefore, any substrate (such as acetate or organic matter) must be added to the contaminated water as an electron donor.

Thus, the method of the present invention is particularly useful for removing oxidised nitrogen compounds from water by bacterial catalysed reduction to nitrogen gas, in contaminated groundwater or wastewater from industrial or municipal origin.

In accordance with an embodiment, the method of the present invention is applied to oxidised nitrogen compounds contaminated water with a low C:N ratio, preferably in contaminated groundwater or to industrial or municipal wastewater with a low C:N ratio, being such low C:N ratio preferably between 0-6 w/w. In a particular preferred embodiment, the method of the present invention is applied to contaminated groundwater or to industrial or municipal wastewater with a C:N ratio between 0-3 w/w.

In accordance with an embodiment of the present invention, the method is applied to contaminated water with oxidised nitrogen compounds, wherein the contaminated water contains an average nitrogen concentration comprised of from 2 mg N-$NO_3^-$ $L^{-1}$ to 200.0 mg N-$NO_3^-$·$L^{-1}$, preferably comprised from 2 mg N-$NO_3^-$ $L^{-1}$ to 50 N-$NO_3^-$ $L^{-1}$, even more preferably from 5.0 to 40.0 mg N-$NO_3^-$ $L^{-1}$.

One of the advantages of the method of the present invention, is the short hydraulic residence time (HRT) of the contaminated water feed (also called cathode influent), i.e. the contaminated water which is introduced into the cathode compartment. The HRT is a measure of the average length of time that the cathode influent remains in the cathode compartment. Therefore, HRT is the net volume of the compartement divided by the influent flow rate:

$$HRT = \text{Volume of compartment/influent flow rate}$$

Where using SI Units Volume is in [$m^3$] and Influent flowrate is in [$m^3/h$]. HRT is usually expressed in hours. In accordance with an embodiment of the present invention, the HRT is comprised from 30 minutes and 12h, preferably between 1 and 6h, being particularly preferred comprised from 1 and 4h. This HRT is enough to achieve a removal efficiency yield of oxidised nitrogen compounds comprised of from 60 and 100 %, preferably comprised of from 75 and 98 %.

Electrode materials must be conductive, biocompatible, and chemically stable in the reactor solution. Metal anodes consisting of noncorrosive stainless steel mesh can be utilized. The most versatile electrode material is carbon, available as compact graphite plates, rods, or granules, as fibrous material (felt, cloth, paper, fibers, foam), and as glassy carbon. Whereas the choice of the cathode material greatly affects performance. Carbon cloth and graphite granular are relatively inexpensive, easy to handle, and have a defined surface area.

According to an embodiment of the present invention, the electrodes can be constructed from the same or different material; being the anode and cathode comprised of one or more materials including but not limited to carbon, stainless steel mesh and mixtures thereof; wherein the carbon is selected from:

- carbon in the form of graphite plates, rods and granules;
- carbon in the form of fibrous material selected from felt, cloth, paper, fibers, and foam; and
- carbon in the form of glassy carbon.

In accordance with an embodiment, one or more of the electrode material comprises a solid support (e.g. graphite) coated on at least one side with a conductive material, such as carbon material or stainless steel.

According to a preferred embodiment, the electrodes are constructed from different materials. More preferably, the anode are stainless steel or carbon material, while the cathode is selected from carbon cloth and granular graphite.

As mentioned above, an ion exchange membrane is disposed between the anode and cathode compartments. Ion exchange membranes suitable for the separation of the cathode and anode compartments in a bioelectrochemical system are known in the art.

According with an embodiment of the present invention, the ion exchange membrane (6) is a cation exchange membrane. Non limiting examples of cation exchange membranes are Nafion N117 (Dupont Co., USA) and Ultrex CMI-7000 (Membranes International Incorp., Glen Rock, NJ, USA). Alternatively, a proton exchange membrane can also be used.

The thickness, length and width of the electrodes, membrane and compartments can be any suitable thickness, length and width, ranging from several centimeters to several meters, to treat from small volumes to large volumes of water.

In the MEC system according to the present invention, the working electrode 5 comprises bacteria able to catalyse the reduction of oxidised nitrogen compounds attached therein, i.e. denitrifying bacteria. Therefore, the system according to the present invention comprises a working electrode 5 having at least a surface on which denitrifying bacterias are present. Denitrifying bacteria are defined solely by their facultative ability to denitrify. Denitrifying microorganisms belong to several taxonomic groups and physiological groups such as lithotrophs, organotrophs, and phototrophs. Denitrifying bacteria are common among the gram-negative alpha and beta classes of the Proteobacteria, such as Pseudomonas, Alcaligenes, Paracoccus, and Thiobacillus. Some gram-positive bacteria are denitrifying such as Bacillus, and a few halophilic Archaea like Halobacterium. Thus, denitrification is not specific to bacteria of any one phylogenetic group; the trait is found in about 50 genera, mostly in the Proteobacteria, althoug also bacteria belonging to the Firmicutes philum have shown denitrifying activity.

Therefore, in accordance with an embodiment of the present invention, a variety of denitrifying bacteria capable to catalyse the reduction of oxidised nitrogen compounds in the cathode can be used, including but not limited to denitrifying bacteria from the Firmicutes and Proteobacteriae philum, more preferably denitrifying bacteria from the from the Clostridia, Alphaproteobacteria, betaproteobacteria, gammaproteobacteria or deltaproteobacteria classes, more preferably denitrifying bacteria from the Geobacteraceae, Hydrogenophilaceae, Methylobacteriaceae, Rodocyclaceae, Comamonadaceae, Xanthomonadaceae, Bradyrhizobiaceae, Enterobacteriaceae or Phyllobacteriaceae families. Being even more preferred those denitrifying bacteria from the Clostridium, Geobacter, Hydrogenophiale, Comamonas, Xanthomonas, Oligotropha or Escherichia genus.

In accordance with a particular embodiment, the MEC system use a community of denitrifying bacteria comprising betaproteobacterium Thiobacillus denitrificans, alphaproteobacterium Methylobacterium nodulans, Polaromonas naphthalenivorans, Dechlorosoma suillum, Sinorhizobium fredii, Dechlorosomonas sp., Thauera sp., Cupriavidus pauculus, Paracoccus denitrificans, Polymorphum gilvum, Rhodanobacter, Sinorhizobium fredii, Rhodopseudomonas palustris, Mesorhizobium sp. 4FB11 and Oligotropha carboxidovorans.

Any known particular strain of the denitrifying species mentioned above, which also shows denitrifying activity, are useful for their use in the MEC system of the invention.

In accordance with an embodiment of the present invention, the composition of the denitrifier community may comprise denitrifying bacteria from one or more different species.

The typical MEC system is a two-chamber system, consisting of both anode and cathode compartments separated by a selectively permeable membrane. Nevertheless, in accordance with some embodiments of the present invention, the MEC system include a plurality of reaction modules, each comprising the anode and cathode compartments as defined herein. The plurality of reaction modules may be arranged in a vertical (e.g. pile) or horizontal (e.g. side by side) succession.

The MEC system according to the present invention is configured to feed the cathode compartment with contaminated water with oxidised nitrogen compounds, and wherein the effluent of the cathode feeds the anode compartment.

An exemplary configuration of the MEC system according to the invention is represented by a chamber wherein two differentiated compartments are separated by a cationic membrane. The contaminated water is introduced into one of the compartments (cathode compartment, 4) using a pump 1. The effluent of the cathode goes to the anode compartment 7, by direct recirculation or by using an extra pump. Two internal recirculation loops (2 and 9) are placed in each compartment to maintain well-mixed conditions and avoid concentration gradients.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and it shall not be construed as limiting the scope of the claim. Furthermore, the present invention covers all possible combinations of particular and preferred embodiments described herein.

The invention is defined by the appended claims.

EXAMPLES

Example 1.

Nitrate contaminated groundwater (average nitrogen concentration of 31.3 mg $N-NO_3^-\cdot L^{-1}$) from the village of Navata (Girona, N.E. Spain) was treated in the cathode of the MEC system. The MEC was inoculated with effluent from a parent MEC that was used to treat high-conductivity acetate and nitrite-enriched wastewaters. The initial inoculum came from an urban wastewater treatment plant which treated biologically organic matter and nitrogen from wastewater. Once the MEC system reached the steady state, a series of experiments were performed to determine the operational conditions for treating contaminated water. The main characteristics of the tests are shown in Table 1. After at least three times the cathode hydraulic retention time (HRT), the influent and effluent concentrations were analysed and cathode potential was measured. Samples were taken for three consecutive days. The results of these tests were expressed as the mean value plus the standard deviation of the measurements.

The identification of the dominant bacteria was done using a PCR-DGGE approach. MEC cathode samples comprised a relatively simple bacterial community. The community structure of denitrifying bacteria was composed by betaproteobacterium Thiobacillus denitrificans, alphaproteobacterium Methylobacterium nodulans, Polaromonas naphthalenivorans, Dechlorosoma suillum, Sinorhizobium fredii, Dechlorosomonas sp., Thauera sp., Cupriavidus pauculus, Paracoccus denitrificans, Polymorphum gilvum, Rhodanobacter, Sinorhizobium fredii, Rhodopseudomonas palustris, Mesorhizobium sp. 4FB11 and Oligotropha carboxidovorans.

Table 1. Comparison of results of experiments under continuous operation at different applied cathode potentials respect to the control experiment and normal operation without the use of a potentiostat, i.e no controlled system (steady-state), n.d. non-detected

Table 1.

| Exp. | Cathode potential (V vs SHE) | Cathode flow ($L\cdot d^{-1}$) | $NO_3^-$ Removed (mg $N-NO_3^- \cdot L^{-1}$) | $NO_2^-$ effluent (mg $N-NO_2^- \cdot L^{-1}$) | $N_2O$ effluent (mg $N-N_2O\cdot L^{-1}$ reactor) | $N_2$ gas effluent (mg $N-N_2\cdot L^{-1}$ reactor) | Removal efficiency (%) |
|---|---|---|---|---|---|---|---|
| Steady-state | -0.02 | 1.26 | 21.03±2.52 | 0.64±1.38 | 10.64 | 9.98 | 62±21 |
| Test 1 (comparative) | 0.02 | 1.33 | 20.51±0.62 | 1.24±0.05 | 16.41 | 4.10 | 58±22 |
| Test 2 (comparative) | 0.20 | 1.33 | 16.39±0.19 | 1.46±0.17 | 15.09 | 1.31 | 45±18 |
| Test 3 (comparative) | 0.40 | 1.33 | 14.17±0.46 | 1.65±0.17 | 12.62 | 1.73 | 42±16 |
| Test 4 (comparative) | 0.60 | 1.27 | 10.90±0.85 | 1.31±0.25 | 8.59 | 2.32 | 35±12 |
| Test 5 | -0.10 | 1.27 | 23.88±0.99 | 0.13±0.23 | 6.09 | 16.78 | 80±23 |
| Test 6 | -0.122 | 1.26 | 18.61 | 0.00 | 0 | 18.6 | 70 |
| Test 7 | -0.114 | 1.26 | 20.8 | 0.10 | 0 | 20.7 | 70 |
| Test 8 | -0.123 | 1.26 | 27.2 | 0.24 | 0 | 26.7 | 95 |
| Test 9 | -0.203 | 1.26 | 28.91 | 0.00 | 6.29 | 22.65 | 86 |

(continued)

| Exp. | Cathode potential (V vs SHE) | Cathode flow (L·d⁻¹) | NO₃⁻ Removed (mg N-NO₃⁻·L⁻¹) | NO₂⁻ effluent (mg N-NO₂⁻·L⁻¹) | N₂O effluent (mg N-N₂O·L⁻¹ reactor) | N₂ gas effluent (mg N-N₂·L⁻¹ reactor) | Removal efficiency (%) |
|---|---|---|---|---|---|---|---|
| Control | +0.28 | 1.26 | 2.68 | n.d | 2.68 | n.d | 10 |

The MEC system treating nitrate contaminated groundwater was operated for 103 days. Once the process reached the steady-state, the nitrogen removal was $21.03 \pm 2.52$ mg N-NO₃⁻·L⁻¹ (removal efficiency of $48 \pm 14\%$). Almost the same amount of nitrous oxide (N₂O) and dinitrogen gas (N₂) were produced during nitrate reduction (Table 1). Nitrite concentration of the effluent was higher than the standards (< 1 mg·L⁻¹ N-NO₂⁻) for drinking water. Moreover, more than 50% of nitrate removed ended up to nitrous oxide. This result confirmed that the nitrate reduction was not complete. In order to improve its performance in terms of nitrogen removal efficiency, different tests were carried out in triplicate modifying the cathode potential from -0.2 to 0.6 V vs SHE (Figure 2). Nitrate removal increased linearly lowering cathode potentials. $10.90 \pm 0.85$ mg N-NO₃⁻·L⁻¹ (35% removal efficiency) were removed at the highest cathode potential of 0.60 V vs SHE in comparison with $23.88 \pm 0.99$ mg N-NO₃⁻·L⁻¹ (80% removal efficiency) were removed at a cathode potential of - 0.10 V vs SHE. At a lower potential the energy available for electrotrophs (as the difference between the theoretical and experimental potential for nitrate reduction) increased. These different performances influenced the nitrogen compounds at the effluent. Nitrite concentrations of the effluent were always below 2 mg N-NO₂⁻·L⁻¹ (Table 1). The first reduction step was almost complete. Nitrous oxide and dinitrogen gas concentrations were more influenced by the cathode potential.

Similar results are obtained using a community of denitrifying bacteria which comprises different species of denitrifying bacteria that those comprised in the community of example 1.

Example 2.

The following example shows the results obtained when the daily flow of contaminated water was increased (double), maintaining the cathodic potential at -0.1 V vs SHE. Increasing the daily flow implies increasing the nitrogen influent concentration.

Table 2 shows the results of experiments under continuous operation increasing the daily flow and maintaining the cathodic potential.

Table 2.

| Cathodic potential (V vs SHE) | Daily flow (L/d) | Nitrogen influent (mg N/L) | Nitrogen effluent (mg N/L) | Current applied (A/m3) |
|---|---|---|---|---|
| -0.1 | 1.26 | 28.9 | 10.3 | 21.1 |
| -0.1 | 2.67 | 31.6 | 10.9 | 45.1 |

Thus, in view of the results obtained, while maintaining the cathodic potential at -0.1 V vs. SHE, and duplicating the nitrogen loading to be treated, the water quality at the outlet is similar. To meet the needs of the potentiostat tretment must increase the number of electrons in the system for reducing nitrogen compounds and therefore, the applied intensity is doubled from 21.1 to 45.1 A/m³.

**Claims**

1. A method for treating water containing oxidised nitrogen compounds comprising the steps of:

    a) providing a microbial electrolysis cell system comprising an anode compartment (7) and a cathode compartment (4) placed on opposite sides of a chamber; a working electrode (5) and a reference electrode(3) located in the cathode compartment; a counter electrode (8) located in the anode compartment; an ion exchange membrane (6) located between the anode and cathode compartments; and a potentiostat (10), monitored and controlled by a control panel (11), operatively connected to the working electrode, the reference electrode and the counter electrode, such that it poises the cathode potential in a range from -0.215 to -0.06 V vs Standard Hydrogen Electrode (SHE); the system further comprising bacterias able to reduce oxidised nitrogen compounds attached to the working electrode (5);

b) continuously feeding the cathode compartment with an influent of contaminated water with oxidised nitrogen compounds; thereby the nitrogen oxidised compounds are bacterially catalysed reduced to nitrogen gas in the microbial electrolysis cell system by the bacteria attached to the working electrode while the cathode potential is maintained in the range from -0.215 to -0.06 V vs SHE; followed by

c) continuosly passing the effluent of the cathode compartment to the anode compartment wherein a oxidation reaction of water to oxygen gas occurs; and

d) continuously discharging the treated water as an efluent from the anode compartment, the method further comprising recirculating the water of the cathode and of the anode compartments by respective internal loops (2, 9) placed one in each compartment.

2. The method according to the claim 1, wherein the HRT of the contaminated water in the cathode compartment is comprised from 30 minutes and 12h.

3. The method according to the claim 2, wherein the HRT of the contaminated water in the cathode compartment is comprised between 1 and 6h.

4. The method according to any of claims 1-3, wherein the potentiostat poises the cathode potential in a range comprised of from -0.210 to -0.100 V vs SHE.

5. The method according to any of claims 1-4, wherein the electrodes are comprised of one or more materials selected from the group consisting of carbon, stainless steel mesh and mixtures thereof; wherein the carbon is selected from:

- carbon in the form of graphite plates, rods and granules;
- carbon in the form of fibrous material selected from felt, cloth, paper, fibers,and foam, and
- carbon in the form of glassy carbon.

6. The method according to any of claims 1-5, wherein the anode material is stainless steel and the cathode material is selected from carbon cloth and graphite granular.

7. The method according to any of claims 1-6, wherein the ion exchange membrane (6) is a cation exchange membrane.

8. The method according to any of claims 1-7, wherein the retention time of the contaminated water feed in the cathode compartment is comprised of from 1 and 4 h.

9. The method according to any of claims 1-8, wherein when a variation in the concentration of oxidised nitrogen compounds in the water occurs, then the potentiostat varies the current applied to meet the poised cathode potential.

10. A microbial electrolysis cell system specially designed to the treatment of water containing oxidised nitrogen compounds from water by bacterial catalysed reduction, comprising an anode compartment (7) and a cathode compartment (4) placed on opposite sides of a chamber; a working electrode (5) and a reference electrode (3) located in the cathode compartment; a counter electrode (8) located in the anode compartment; an ion exchange membrane (6) located between the anode and cathode compartments; a potentiostat (10) operatively connected to the working electrode (5), the reference electrode (3) and the counter electrode (8); and a control panel (11) controlling the potentiostat to poise the cathode potential in a range from -0.215 to -0.06 V vs Standard Hydrogen Electrode (SHE); the system further comprising bacteria able to reduce oxidised nitrogen compounds attached to the working electrode (5), the system being **characterized in that** the anode and the cathode compartments are connected so that the effluent of the cathode compartment is fed to the anode compartment, and **in that** it further incorporates an internal recirculation loop (2, 9) in each compartment (4, 7).

11. The microbial electrolysis cell system according to claim 10-, wherein the electrodes are comprised of one or more materials selected from the group consisting of carbon, stainless steel mesh and mixtures thereof; wherein the carbon is selected from:

- carbon in the form of graphite plates, rods and granules;

- carbon in the form of fibrous material selected from felt, cloth, paper, fibers,and foam, and
- carbon in the form of glassy carbon.

12. The microbial electrolysis cell system according to any of claims 10 or 11, wherein the anode material is stainless steel and the cathode material is selected from carbon cloth and graphite granular.

13. The microbial electrolysis cell system according to any of claims 10 to 12, wherein the ion exchange membrane (6) is a cation exchange membrane.

**Patentansprüche**

1. Verfahren zur Behandlung von oxidierte Stickstoffverbindungen enthaltendem Wasser, welches die folgendes Schritte umfasst:

a) das Bereitstellen eines mikrobiellen Elektrolysezellensystems umfassend einen Anodenraum (7) und einen Kathodenraum (4), welche auf entgegengesetzten Seiten einer Kammer platziert sind; eine Arbeitselektrode (5) und eine Bezugselektrode (3), welche sich im Kathodenraum befinden; eine Gegenelektrode (8), welche sich im Anodenraum befindet; einen Ionenaustauschmembran (6), welche sich zwischen dem Anoden- und dem Kathodenraum befindet; und einen Potentiostat (10), welcher von einer Steuertafel (11) überwacht und gesteuert wird, welche mit der Arbeitselektrode, der Bezugselektrode und der Gegenelektrode wirkverbunden ist, so dass das Kathodenpotential in einem Bereich, welcher zwischen -0,215 und 0,06 V vs. Standardwasserstoffelektrode (SHE) liegt, festgelegt wird; wobei das System zusätzlich Bakterien umfasst, welche in der Lage sind, die oxidierten, an der Arbeitselektrode (5) befestigten Stickstoffverbindungen zu reduzieren;
b) das durchgängige Einspeisen des Kathodenraums mit einem Zulauf von kontaminiertem Wasser mit oxidierten Stickstoffverbindungen; dadurch werden die oxidierten Stickstoffverbindungen mittels bakterieller Katalyse zu Stickstoffgas im mikrobiellen Elektrolysezellensystem durch die an der Arbeitselektrode befestigten Bakterien reduziert, während das Kathodenpotential in einem Bereich von -0,215 bis 0,06 V vs. SHE gehalten wird; gefolgt von
c) dem durchgängigen Durchlaufen des Ablaufs vom Kathodenraum zum Anodenraum, in welchem eine Oxidationsreaktion des Wassers zu Sauerstoffgas stattfindet; und
d) dem durchgängigen Ausfließen des behandelten Wassers als Ablauf aus dem Anodenraum, wobei das Verfahren zusätzlich das Rückfördern des Wassers des Kathoden- und des Anodenraums durch jeweilige innere Umführungen (2, 9) umfasst, welche einzeln in jedem Raum platziert sind.

2. Verfahren nach Anspruch 1, in welchem die HRT des kontaminierten Wassers im Kathodenraum zwischen 30 Minuten und 12 h liegt.

3. Verfahren nach Anspruch 2, in welchem die HRT des kontaminierten Wassers im Kathodenraum zwischen 1 und 6 h liegt.

4. Verfahren nach einem der Ansprüche 1-3, in welchem der Potentiostat das Kathodenpotential in einem Bereich von -0,210 bis -0,100 V vs. SHE festlegt.

5. Verfahren nach einem der Ansprüche 1-4, in welchem sich die Elektroden aus einem oder mehreren Materialien zusammensetzen, ausgewählt aus der Gruppe bestehend aus Kohlenstoff, Edelstahlnetz und Mischungen derselben; wobei der Kohlenstoff aus:

- Kohlenstoff in Form von Graphitplatten, -stäben und -granulaten;
- Kohlenstoff in Form von faserigem Material ausgewählt aus Filz, Tuch, Papier, Fasern und Schaum, und
- Kohlenstoff in Form von glasartigem Kohlenstoff

ausgewählt wird.

6. Verfahren nach einem der Ansprüche 1-5, in welchem das Anodenmaterial Edelstahl ist und das Kathodenmaterial aus Kohlenstofftuch und Graphitgranulat ausgewählt wird.

7. Verfahren nach einem der Ansprüche 1-6, in welchem die Ionenaustauschmembran (6) eine Kationenaustausch-

membran ist.

8. Verfahren nach einem der Ansprüche 1-7, in welchem die Verweilzeit der kontaminierten Wassereinspeisung im Kathodenraum zwischen 1 und 4 h liegt.

9. Verfahren nach einem der Ansprüche 1-8, in welchem, wenn eine Änderung in der Konzentration der oxidierten Stickstoffverbindungen im Wasser stattfindet, dann der Potentiostat der angewendete Strom ändert, um das festgelegte Kathodenpotential zu erfüllen.

10. Mikrobielles Elektrolysezellensystem, welches insbesondere für die Behandlung von Wasser gestaltet ist, welches oxidierte Stickstoffverbindungen aus Wasser enthält, mittels bakterieller katalysierten Reduktion, umfassend einen Anodenraum (7) und einen Kathodenraum (4), welche auf entgegengesetzten Seiten einer Kammer platziert sind; eine Arbeitselektrode (5) und eine Bezugselektrode (3), welche sich im Kathodenraum befinden; eine Gegenelektrode (8), welche sich im Anodenraum befindet; eine Ionenaustauschmembran (6), welche sich zwischen dem Anoden- und dem Kathodenraum befindet; und einen Potentiostat (10), welcher mit der Arbeitselektrode (5), der Bezugselektrode (3) und der Gegenelektrode (8) wirkverbunden ist, und eine Steuertafel (11), welche den Potentiostat steuert, um das Kathodenpotential in einem Bereich, welcher zwischen -0,215 und 0,06 V vs. Standardwasserstoffelektrode (SHE) liegt, festzulegen; wobei das System zusätzlich Bakterien umfasst, welche in der Lage sind, die oxidierten, an der Arbeitselektrode (5) befestigten Stickstoffverbindungen zu reduzieren, wobei das System **dadurch gekennzeichnet ist, dass** der Anoden- und der Kathodenraum derart angeschlossen sind, dass der Ablauf des Kathodenraums zum Anodenraum eingespeist wird, und dass es zusätzlich eine innere Rückföderungsumführung (2, 9) in jedem Raum (4, 7) beinhaltet.

11. Mikrobielles Elektrolysezellensystem nach Anspruch 10, in welchem sich die Elektroden aus einem oder mehreren Materialien zusammensetzen, ausgewählt aus der Gruppe bestehend aus Kohlenstoff, Edelstahlnetz und Mischungen derselben; wobei der Kohlenstoff aus :

   - Kohlenstoff in Form von Graphitplatten, -stäben und -granulaten;
   - Kohlenstoff in Form von faserigem Material ausgewählt aus Filz, Tuch, Papier, Fasern und Schaum, und
   - Kohlenstoff in Form von glasartigem Kohlenstoff

ausgewählt wird.

12. Mikrobielles Elektrolysezellensystem nach einem der Ansprüche 10 oder 11, in welchem das Anodenmaterial Edelstahl ist und das Kathodenmaterial aus Kohlenstofftuch und Graphitgranulat ausgewählt wird.

13. Mikrobielles Elektrolysezellensystem nach einem der Ansprüche 10 bis 12, in welchem die Ionenaustauschmembran (6) eine Kationenaustauschmembran ist.

**Revendications**

1. Procédé de traitement d'eau contenant des composés d'azote oxydé comprenant les étapes de :

   a) fournir un système cellulaire microbien d'électrolyse comprenant un compartiment anodique (7) et un compartiment cathodique (4) mis en place sur des côtés opposés d'une chambre ; une électrode de travail (5) et un électrode de référence (3) situées dans le compartiment cathodique ; une contre-électrode (8) située dans le compartiment anodique ; une membrane d'échange d'ions (6) située entre les compartiments anodique et cathodique ; et un potentiostat (10), surveillé et commandé par un panneau de commande (11), connecté de manière opérationnelle à l'électrode de travail, l'électrode de référence et la contre-électrode, de manière qu'il mette en équilibre le potentiel cathodique dans l'intervalle de -0,215 à -0,06 V contre l'Electrode d'hydrogène standard (SHW) ; le système comprenant en outre des bactéries aptes à réduire les composés d'azote oxydé fixés à l'électrode de travail (5) ;
   b) alimenter en permanence le compartiment cathodique avec un influent d'eau contaminée avec des composés d'azote oxydé ; les composés d'azote oxydé sont alors catalysés de manière bactérienne réduits au gaz d'azote dans le système cellulaire microbien d'électrolyse par les bactéries fixées à l'électrode de travail tandis que le potentiel cathodique se maintient dans l'intervalle de -0,215 à -0,06 V contre SHE ; suivie de
   c) passer de manière continue l'effluent du compartiment cathodique au compartiment anodique dans laquelle a lieu une réaction d'oxydation de l'eau au gaz d'oxygène ; et

d) décharger en permanence l'eau traitée comme un effluent du compartiment anodique, le procédé comprenant en outre la recirculation de l'eau des compartiments cathodique et anodique par les boucles internes respectives (2, 9) situées une dans chaque compartiment.

2. Procédé selon la revendication 1, dans lequel le HRT de l'eau contaminé dans le compartiment cathodique est compris entre 30 minutes et 12 heures.

3. Procédé selon la revendication 2, dans lequel le HRT de l'eau contaminé dans le compartiment cathodique est compris entre 1 heure et 6 heures.

4. Procédé selon l'une quelconque des revendications 1-3, dans lequel le potentiostat met en équilibre le potentiel cathodique dans l'intervalle de -0,210 à - 0,100 contre SHE.

5. Procédé selon l'une quelconque des revendications 1-4, dans lequel les électrodes comprennent une ou plusieurs matières choisies parmi le groupe constitué par le carbone, le grillage en acier inoxydable et un mélange de ceux-ci ; dans lequel le carbone est choisi parmi :

   - le carbone en forme de plaques, tiges ou granules de graphite ;
   - le carbone en forme de matière fibreuse choisie parmi le feutre, le tissu, le papier, les fibres, et la mousse, et
   - le carbone en forme de carbone vitreux.

6. Procédé selon l'une quelconque des revendications 1-5, dans lequel la matière anodique est de l'acier inoxydable et la matière cathodique est choisie parmi le tissu de carbone et le granulat de graphite.

7. Procédé selon l'une quelconque des revendications 1-6, dans lequel la membrane d'échange d'ions (6) est une membrane d'échange de cations.

8. Procédé selon l'une quelconque des revendications 1-7, dans lequel le temps de rétention de l'eau contaminée alimentée dans le compartiment cathodique est compris entre 1 heure et 4 heures.

9. Procédé selon l'une quelconque des revendications 1-8, dans lequel lorsqu'il y a une variation dans la concentration des composés d'azote oxydé dans l'eau, alors le potentiostat varie le courant appliqué pour satisfaire le potentiel cathodique mis en équilibre.

10. Système cellulaire microbien d'électrolyse conçu spécialement pour le traitement de l'eau contenant des composé d'azote oxydé de l'eau par la réduction bactérienne catalysée, comprenant un compartiment anodique (7) et un compartiment cathodique (4) mis en place sur des côtés opposés d'une chambre ; une électrode de travail (5) et un électrode de référence (3) situées dans le compartiment cathodique ; une contre-électrode (8) située dans le compartiment anodique ; une membrane d'échange d'ions (6) située entre les compartiments anodique et cathodique; un potentiostat (10) connecté de manière opérationnelle à l'électrode de travail (5), l'électrode de référence (3) et la contre-électrode (8), et un panneau de commande (11) commandant le potentiostat pour mettre équilibre le potentiel cathodique dans l'intervalle de - 0,215 à -0,06 V contre l'Electrode d'hydrogène standard (SHW) ; le système comprenant en outre des bactéries aptes à réduire les composés d'azote oxydé fixés à l'électrode de travail (5), le système étant **caractérisé en ce que** les compartiments anodique et cathodique sont connectés de manière que l'effluent du compartiment cathodique alimente le compartiment anodique, et **en ce qu'**il incorpore une boucle de recirculation interne (2, 9) dans chaque compartiment (4, 7).

11. Système cellulaire microbien d'électrolyse selon la revendication 10, dans lequel les électrodes comprennent une ou plusieurs matières choisies parmi le groupe constitué par le carbone, le grillage en acier inoxydable et un mélange de ceux-ci ; dans lequel le carbone est choisi parmi :

   - le carbone en forme de plaques, tiges ou granules de graphite ;
   - le carbone en forme de matière fibreuse choisie parmi le feutre, le tissu, le papier, les fibres, et la mousse, et
   - le carbone en forme de carbone vitreux.

12. Système cellulaire microbien d'électrolyse selon l'une quelconque des revendications 10 ou 11, dans lequel la matière anodique est de l'acier inoxydable et la matière cathodique est choisie parmi le tissu de carbone et le granulat de graphite.

13. Système cellulaire microbien d'électrolyse selon l'une quelconque des revendications 10 à 12, dans lequel la membrane d'échange d'ions (6) est une membrane d'échange de cations.

FIG 1

FIG 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012012647 A

- EP 2000000 A

**Non-patent literature cited in the description**

- **JOACHIM DESLOOVER et al.** Biocathodic Nitrous Oxide Removal in Bioelectrochemical Systems. *Environmetal Science & Technology,* 15 December 2011, vol. 45 (24